Europäisches Patentamt

European Patent Office

Office européen des brevets

(11) Veröffentlichungsnummer: **0 481 268 A1**

## (12) EUROPÄISCHE PATENTANMELDUNG

(21) Anmeldenummer: **91116504.1**

(22) Anmeldetag: **27.09.91**

(51) Int. Cl.5: **F16F 15/12**

(30) Priorität: **04.10.90 DE 4031312**

(43) Veröffentlichungstag der Anmeldung:
**22.04.92 Patentblatt 92/17**

(84) Benannte Vertragsstaaten:
**AT BE CH DE ES FR GB IT LI**

(71) Anmelder: **DEERE & COMPANY**
**1 John Deere Road**
**Moline, Illinois 61265(US)**

(72) Erfinder: **Springer, Klaus, Dipl.-Ing.**
**Plinderheide 37**
**W-4404 Telgte(DE)**

(74) Vertreter: **Feldmann, Bernhard et al**
**DEERE & COMPANY European Office Patent**
**Department Steubenstrasse 36-42**
**W-6800 Mannheim 1(DE)**

(54) **Torsionsschwingungsdämpferanordnung.**

(57) Eine Torsionsschwingungsdämpferanordnung zur Übertragung von Drehmomenten von einem Antriebsteil, vorzugsweise der Schwungscheibe (10) einer Verbrennungskraftmaschine, auf ein angetriebenes Teil, vorzugsweise eine Gelenkwelle (57), hat einen Torsionsschwingungsdämpfer mit einem am Antriebsteil befestigbaren Mitnehmerelement (24), einem an einer Torsionsdämpfernabe (28), die mit dem angetriebenen Teil in Eingriff steht, befestigten Mitnehmerelement (30, 32) sowie Dämpferfedern (34), die in Ausnehmungen zwischen den Mitnehmerelementen (24, 30, 32) angeordnet sind. Eine derartige Torsionsschwingungsdämpferanordnung soll eine unmittelbare - ohne Zwischenschaltung einer Kupplung - Verbindung zwischen dem Antriebsteil und dem angetriebenen Teil ermöglichen, kostengünstig herstellbar und einfach montierbar sein und eine in axialer Richtung geringe Baulänge aufweisen. Dies wird dadurch erreicht, daß die Torsionsdämpfernabe (28) durch wenigstens ein Lager (40, 60, 62, 68, 80, 108) unmittelbar an dem Antriebsteil (10) drehbar gelagert ist.

FIG.1

EP 0 481 268 A1

Die Erfindung betrifft eine Torsionsschwingungsdämpferanordnung zur Übertragung von Drehmomenten von einem Antriebsteil, vorzugsweise der Schwungscheibe einer Verbrennungskraftmaschine, auf ein angetriebenes Teil, vorzugsweise eine Gelenkwelle, wobei der Torsionsschwingungsdämpfer im wesentlichen wenigstens ein am Antriebsteil befestigbares Mitnehmerelement, wenigstens ein an einer Torsionsdämpfernabe, die mit dem angetriebenen Teil in Eingriff steht, befestigtes Mitnehmerelement sowie Dämpferfedern enthält, die zwischen den Mitnehmerelementen angeordnet sind. Dabei ist in der Regel das radial äußere Mitnehmerelement am Antriebsteil und das radial innenliegende Mitnehmerelement an der Torsionsdämpfernabe befestigt.

Torsionsschwingungsdämpfer werden häufig im Zusammenhang mit Motorkupplungen von Fahrzeugen verwendet. Dabei steht der Torsionsschwingungsdämpfer über eine mit Kupplungsbelägen bestückte Mitnehmerscheibe mit dem Schwungrad des Motors in Verbindung. Eine Habe des Torsionsschwingungsdämpfers, die zur Aufnahme der Dämpferfedern zwei axial zueinander beabstandete Deckbleche trägt, ist über eine Innenkeilverzahnung drehfest mit einer außenverzahnten Ausgangswelle verbunden, wobei axiale Ausgleichsbewegungen zwischen Nabe und Ausgangswelle möglich bleiben. Die Ausgangswelle stützt sich über ein Lager unmittelbar an dem Schwungrad ab.

Soll hingegen eine Gelenkwelle lediglich unter Zwischenschaltung einer Torsionsschwingungsdämpferanordnung, jedoch ohne Kupplung mit der Schwungscheibe des Motors verbunden werden, so muß das Führungslager zwischen Gelenkwelle und Schwungscheibe Kippkräfte aufnehmen und entsprechend axial dimensioniert sein. Allerdings sollte axialer Bauraum gespart werden, um die Gelenkwelle möglichst lang ausbilden zu können, da eine lange Gelenkwelle geringere Verlustkräfte verursacht als eine kurze.

Die mit der Erfindung zu lösende Aufgabe wird darin gesehen, eine Torsionsschwingungsdämpferanordnung der eingangs genannten Art anzugeben, durch die eine unmittelbare - ohne Zwischenschaltung einer Kupplung - Verbindung zwischen einem Antriebsteil und einem angetriebenen Teil möglich ist, die sich kostengünstig herstellen und einfach montieren läßt und eine in axialer Richtung geringe Baulänge ermöglicht.

Die Aufgabe wird erfindungsgemäß dadurch gelöst, daß die Torsionsdämpfernabe durch wenigstens ein Lager an dem Antriebsteil drehbar festgelegt ist. Durch diese unmittelbare Lagerung des Torsionsschwingungsdämpfers an dem Antriebsteil kann die Torsionsdämpfernabe neben der Übertragung des Drehmomentes auch die Lagerung und Führung für das angetriebene Teil übernehmen.

Das anzutreibende Teil ist hierbei nicht unmittelbar am Schwungrad gelagert, sondern läßt sich vorzugsweise drehfest mit der Torsionsdämpfernabe verbinden, z. B. an diese anflanschen. Hierbei weisen zweckmäßigerweise die Torsionsdämpfernabe und das angetriebene Teil zueinander korrespondierende, im wesentlichen radial ausgerichtete Flansche auf, wobei die Dämpferfedern zur weiteren Einsparung axialen Bauraumes vorzugsweise axial außerhalb des Flanschbereiches liegen. Das Lager zwischen Torsionsdämpfernabe und Antriebsteil erlaubt eine Drehpendelbewegung um die Antriebsachse, nicht jedoch eine axiale Verschiebung der Torsionsdämpfernabe.

Die erfindungsgemäße Lösung ermöglicht eine relativ geringe axiale Baulänge, da sich die einzelnen Bauteile innerhalb des Antriebsteils, bei dem es sich um eine relativ dicke Schwungscheibe handeln kann, verschachteln lassen. Der Torsionsdämpfer, das Lager und der Anschlußflansch des angetriebenen Teils können vollständig innerhalb der Außenkontur der Schwungscheibe liegen. Nach Vormontage des Lagers läßt sich der Torsionsdämpfer sehr einfach durch Aufstecken und Festschrauben montieren oder austauschen. Ferner ist der Torsionsdämpfer relativ zum Antriebsteil zentriert und das Lager nimmt Fliehkräfte auf.

Als Lager kommt vorzugsweise ein zweireihiges Schrägkugellager, ein gepaartes Rillenkugellager oder ein Gleitlager in Betracht. Das Lager kann zwar grundsätzlich von einem Lagerzapfen des Antriebsteils getragen werden, um jedoch eine gedrungene Bauweise zu erhalten ist es von Vorteil, wenn der Lageraußenring von einer axialen Ausnehmung des Antriebsteils aufgenommen wird und ein Lagerinnenring die Torsionsdämpfernabe trägt. Dabei wird der Außenring des Lagers gegen axiale Verschiebung in der Ausnehmung des Antriebsteils gesichert.

Um das Lager vor Verschmutzung zu schützen ist es zweckmäßig, die Torsionsdämpfernabe derart auszubilden, daß sie gegen das Lager, das Antriebsteil und gegebenenfalls einen Sicherungsring ein fremdkörperabweisendes Labyrinth bildet. Hierbei paßt sich die Kontur der Torsionsdämpfernabe weitgehend den Abmessungen der jeweils gegenüberliegenden Bauteile an, wobei lediglich relativ kleine Abstände eingehalten werden.

Zur Befestigung der Torsionsdämpfernabe am Lagerinnenring ist vorzugsweise in die Innenbohrung des Lagers ein Bundbolzen von der der Torsionsdämpfernabe axial gegenüberliegenden Seite aus einsetzbar, der mit der Torsionsdämpfernabe derart verschraubbar ist, daß der Lagerinnenring zwischen Torsionsdämpfernabe und Bundbolzen eingespannt wird. Hierbei kann die Einhaltung einer kurzen Baulänge dadurch unterstützt werden, daß der Bundbolzen an seinem einen Ende einen Bund trägt, der im Bereich des der Torsionsdämpfernabe axial gegenüberliegenden Endes des Lagerinnenringes in eine Ringnut im Lagerinnenring eingreift. Eine alternative Ausführung sieht einen Bundbolzen vor, der in seinem axial mittleren Bereich einen Bund trägt, der in wenigstens eine mittlere Ringnut zweier hintereinander angeordneter Rillenkugellager eingreift. Hierbei können beide Rillenkugellager identisch ausgebildet sein.

Zur Zentrierung der Torsionsdämpfernabe weist diese vorzugsweise einen zylindrischen Ansatz auf, der von der axialen Bohrung des Lagerinnenringes aufgenommen und geführt wird und dessen axiale Erstreckung kürzer ist als die des Lagerinnenringes. Zum Zwecke der Zentrierung genügt ein relativ kurzer Ansatz.

Weitere vorteilhafte Ausgestaltungen und Weiterbildungen der Erfindung gehen aus den Unteransprüchen hervor.

Anhand der Zeichnung, die mehrere Ausführungsbeispiele der Erfindung zeigt, sollen die Erfindung sowie weitere Vorteile und vorteilhafte Weiterbildungen und Ausgestaltungen der Erfindung näher beschrieben und erläutert werden.

Es zeigt:

Fig. 1     den Querschnitt durch eine erfindungsgemäße Torsionsschwingungsdämpferanordnung,

Fig. 2 - 5  acht unterschiedliche Lagerungen des Torsionsschwingungsdämpfers unter Verwendung gepaarter Rillenkugellager und

Fig. 6     die Lagerung des Torsionsschwingungsdämpfers unter Verwendung eines Gleitlagers.

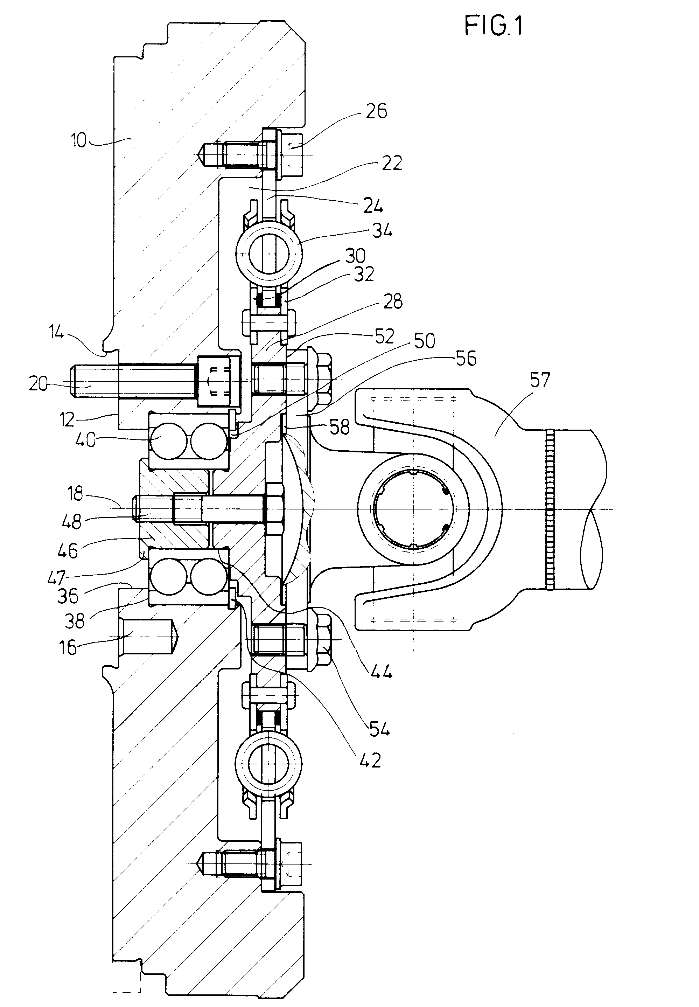

Aus Fig. 1 ist eine Schwungscheibe 10 ersichtlich, die über den Kurbelwellenflansch 12 an die Kurbelwelle eines nicht dargestellten Motors, beispielsweise des Motors einer landwirtschaftlichen Maschine, anflanschbar ist. Der Zentrierung der Schwungscheibe 10 mit der Kurbelwelle dienen ein Zentrierbund 14 und in Zentrierbohrungen 16 einsetzbare Zentrierstifte. Die Befestigung erfolgt durch mehrere um die Drehachse 18 gruppierte Gewindeschrauben 20, von denen lediglich eine dargestellt ist.

Die dem Kurbelwellenflansch 12 abgewandte Seite der Schwungscheibe 10 weist eine zur Drehachse 18 rotationssymmetrische Ausnehmung 22 auf, die einen im wesentlichen herkömmlichen Torsionsschwingungsdämpfer aufnimmt. Der Torsionsschwingungsdämpfer besteht insbesondere aus einer äußeren Mitnehmerscheibe 24, die durch Schrauben 26 an der Schwungscheibe 10 festgeschraubt ist, einer Torsionsdämpfernabe 28, mit der ein vorderes und ein hinteres Deckblech 30, 32 vernietet sind, und mehrere Dämpferfedern 34. Bei den Dämpferfedern 34 handelt es sich um Spiralfedern, die in Umfangsrichtung des Torsionsschwingungsdämpfers ausgerichtet sind und üblicherweise in Fenstern der Mitnehmerscheibe 24 und der Deckbleche 30, 32 angeordnet sind. Dabei lassen die Dämpferfedern 34 ein gegenseitiges Verdrehen der Mitnehmerscheibe 24 und der Torsionsdämpfernabe 28 bezüglich der Drehachse 18 um wenige Grade zu, wodurch kurzzeitige Schwankungen der Umdrehungsgeschwindigkeit aufgenommen werden können.

Die Schwungscheibe 10 weist eine mit der Drehachse 18 fluchtende stufenförmige Bohrung 36 auf. Die beiden unterschiedlichen Durchmesser der Bohrung 36 sind durch eine radiale Ringfläche 38 verbunden. Der Teil der Bohrung 36 mit dem größeren Durchmesser, der dem Torsionsschwingungsdämpfer zugewandt ist, nimmt den Lageraußenring eines 2-reihigen Schrägkugellagers 40 auf. Das Schrägkugellager 40 wird an einer axialen Verschiebung durch die als Anschlag dienende Ringfläche 38 einerseits und durch einen in einer Nut in der Schwungscheibe 10 eingeschnappten Sicherungsring 42 andererseits gehindert.

Die Torsionsdämpfernabe 28 weist einen zylindrischen, relativ kurzen Ansatz 44 auf, der in die Bohrung des Lagerinnenringes des Schrägkugellagers eingreift und der Führung und Zentrierung der Torsionsdämpfernabe 28 dient. Von der anderen Seite aus ist in die Bohrung des Lagerinnenringes ein Bundbolzen 46 eingesteckt, dessen Bund 47 sich an der motorseitigen Stirnfläche des Lagerinnenringes abstützt. Torsionsdämpfernabe 28 und Bundbolzen 46 sind durch eine axiale Sicherungsschraube 48 miteinander verschraubt und spannen den Lagerinnenring des Schrägkugellagers 40 ein. Dabei ist zwischen Bundbolzen 46 und Lagerinnenring sowie zwischen Ansatz 44 und Lagerinnenring jeweils eine schwache Preßpassung gewählt, damit ein Anziehen der Sicherungsschraube 48 ohne Durchdrehen des Bundbolzens 46 möglich ist.

Die dem Schrägkugellager 40 zugewandte Seite der Torsionsdämpfernabe 28 verjüngt sich in ihrem Durchmesser stufenweise. Die einzelnen Stufen sind an die Abmessungen des Schrägkugellagers 40, den Sicherungsring 42 und die Konturen der Schwungscheibe derart angepaßt, daß jeweils lediglich geringe Zwischenräume verbleiben und sich somit ein fremdkörperabweisendes Labyrinth 50 ergibt.

Auf ihrer der Schwungscheibe 10 abgewandten Seite ist an der Torsionsdämpfernabe 28 eine radial ausgerichtete Flanschfläche 52 ausgebildet, an die durch mehrere Schrauben 54 der Anschlußflansch 56 einer Gelenkwelle 57 angeflanscht ist. Zur Zentrierung des Anschlußflansches 56 enthält dieser einen Ansatz 58, der in eine entsprechende Zentrierung der Torsionsdämpfernabe 28 eingreift. Der die Flanschfläche 52 tragende Bereich der Torsionsdämpfernabe 28 liegt in einer Ebene mit dem radial weiter außen liegenden, aus den Deckblechen 30, 32, den Dämpferfedern 34 und der Mitnehmerscheibe 24 bestehenden Torsionsdämpfer. Hierdurch wird eine geringe axiale Baulänge beansprucht, und der Torsionsdämpfer läßt sich vollständig innerhalb der Ausnehmung 22 in der Schwungscheibe 10 anordnen.

Kippmomente der nicht starren Gelenkwelle 57 werden über den Anschlußflansch 56 auf die Torsionsdämpfernabe 28 übertragen. Durch die Verwendung des 2-reihigen Schrägkugellagers 40 werden die Kippkräfte von der Torsionsdämpfernabe 28 an die Schwungscheibe 10 weitergeleitet.

Die Montage des Torsionsdämpfers ist einfach. Zunächst wird der Bundbolzen 46 in den Lagerinnenring eingesteckt und das Schrägkugellager 40 in die Bohrung 36 der Schwungscheibe 10 eingesetzt und durch den Sicherungsring 42 gesichert. Jetzt kann der vormontierte Torsionsdämpfer eingesetzt werden, indem der Ansatz 44 in den Lagerinnenring eingeführt und durch die Sicherungsschraube 48 mit dem Bundbolzen 46 verschraubt wird. Die Mitnehmerscheibe 24 wird durch Schrauben 26 an der Schwungscheibe 10 befestigt. Nun kann die Gelenkwelle 56 befestigt werden, indem der Anschlußflansch 56 auf die Flanschfläche 52 der Torsionsdämpfernabe 28 geschraubt wird.

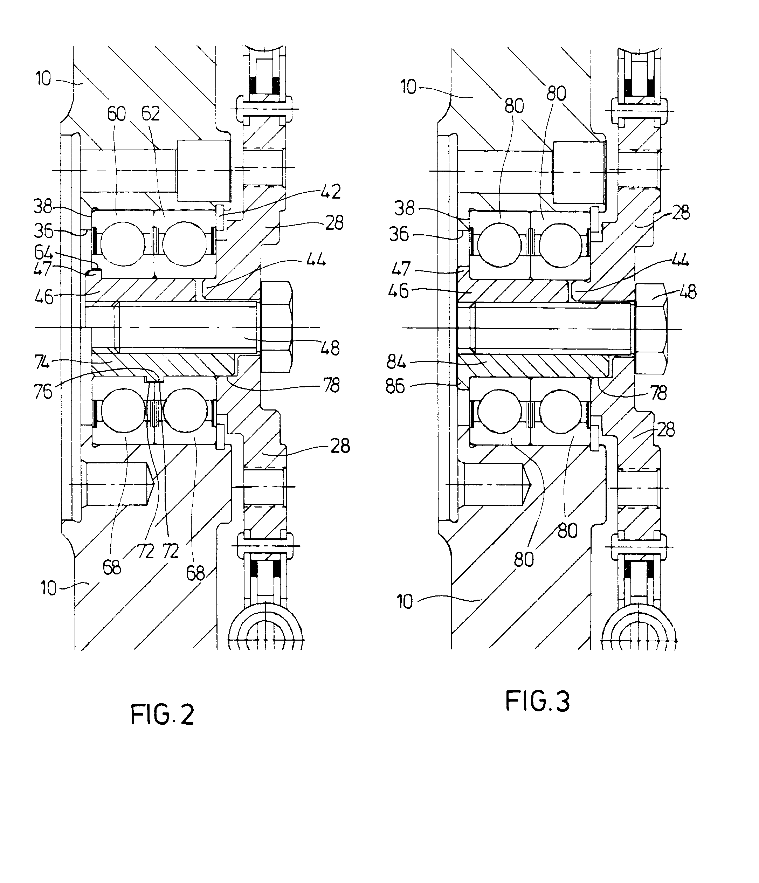

Aus den Figuren 2 bis 5 gehen acht alternative Lagerungen der Torsionsdämpfernabe 28 in der Bohrung 36 des Schwungrades 10 hervor. Jede der Figuren zeigt in ihrer oberen und unteren Hälfte zwei unterschiedliche Lagerungen. In allen Figuren wurden sich entsprechende Bauteile mit denselben Bezugsziffern belegt. Im Unterschied zur Fig. 1 finden gemäß der Figuren 2 bis 5 als Lager jeweils zwei gepaarte Rillenkugellager Anwendung. Die Einspannung dieser Rillenkugellager in der Bohrung 36 der Schwungscheibe 10 erfolgt auf ähnliche Weise wie die Einspannung des Schrägkugellagers 40 gemäß Fig. 1, und zwar zwischen einer Ringfläche 38 und einem Sicherungsring 42.

Bei der Lagerung gemäß der oberen Hälfte der Fig. 2 werden zwei Rillenkugellager 60, 62 verwendet. Die Bohrung des linken Rillenkugellagers 60 hat am linken Ende eine ringförmige Aufweitung 64, die den Bund 57 des Bundbolzens 46 teilweise aufnimmt, wodurch sich die axiale Baulänge verringern läßt. Im übrigen entspricht die Lagerung im wesentlichen der in Fig. 1 dargestellten.

Die in der unteren Hälfte der Fig. 2 dargestellte Lagerung verwendet zwei identische Rillenkugellager 68 mit einander zugewandten mittleren ringförmigen Aufweitungen 72 der Lagerinnenringbohrung. An Stelle eines Bundbolzens mit seitlichem Bund wird hier ein Bundbolzen 74 mit mittlerem Bund 76 verwendet, der in die beiden Aufweitungen 72 der Rillenkugellager 68 eingreift. Der Bundbolzen 74 ragt nach rechts über das rechte Rillenkugellager 68 hinaus und erstreckt sich in eine Bohrung 78 der Torsionsdämpfernabe 28, wodurch die Torsionsdämpfernabe 28 von dem vorstehenden Teil des Bundbolzens 74 getragen und geführt wird. Eine Sicherungsschraube 48 ist in eine Gewindebohrung des Bundbolzens 74 eingeschraubt und spannt das rechte Rillenkugellager 68 zwischen Bund 76 und Torsionsdämpfernabe 28 ein. Auch diese Ausführungsvariante beansprucht lediglich eine geringe axiale Baulänge.

Die obere Hälfte der Fig. 3 zeigt eine Lagerung, die im wesentlichen der in Fig. 1 dargestellten entspricht, nur daß im Unterschied zu Fig. 1 an Stelle des 2-reihigen Schrägkugellagers hier zwei gleiche Rillenkugellager 80 verwendet werden.

Gemäß der unteren Hälfte der Fig. 3 werden ebenfalls zwei gleiche Rillenkugellager 80 verwendet, die keine ringförmigen Aufweitungen ihrer Lagerinnenringbohrungen aufweisen. Ähnlich wie bei der unteren Hälfte der Fig. 2 erstreckt sich der Bundbolzen 84 über die rechte Kante des rechten Rillenkugellagers 80 hinaus in eine Ausnehmung 78 der Torsionsdämpfernabe 28. Jedoch liegt gemäß der unteren Hälfte der Fig. 3 der Bund 86 des Bundbolzens 84 an dessen linkem Ende an.

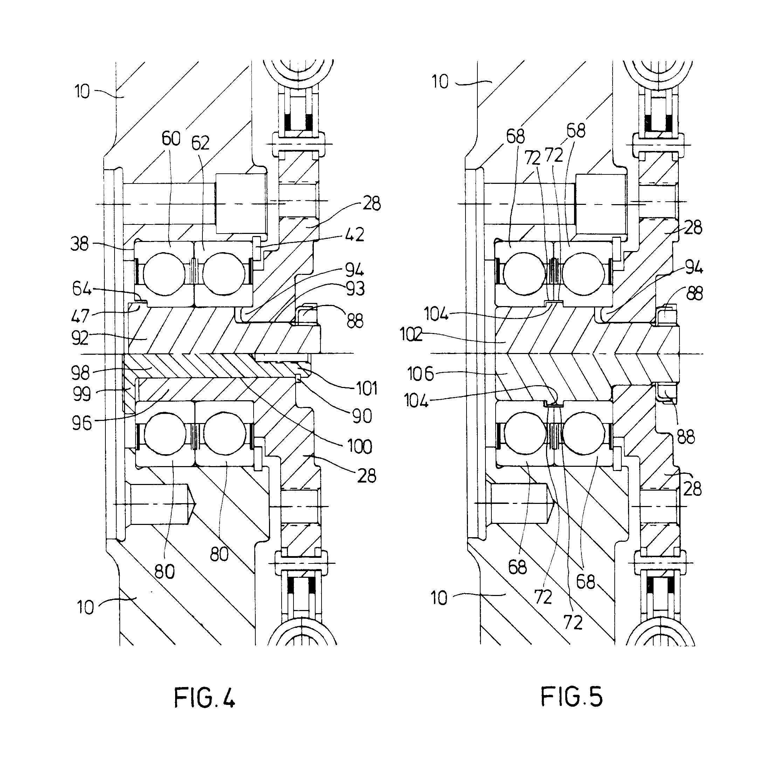

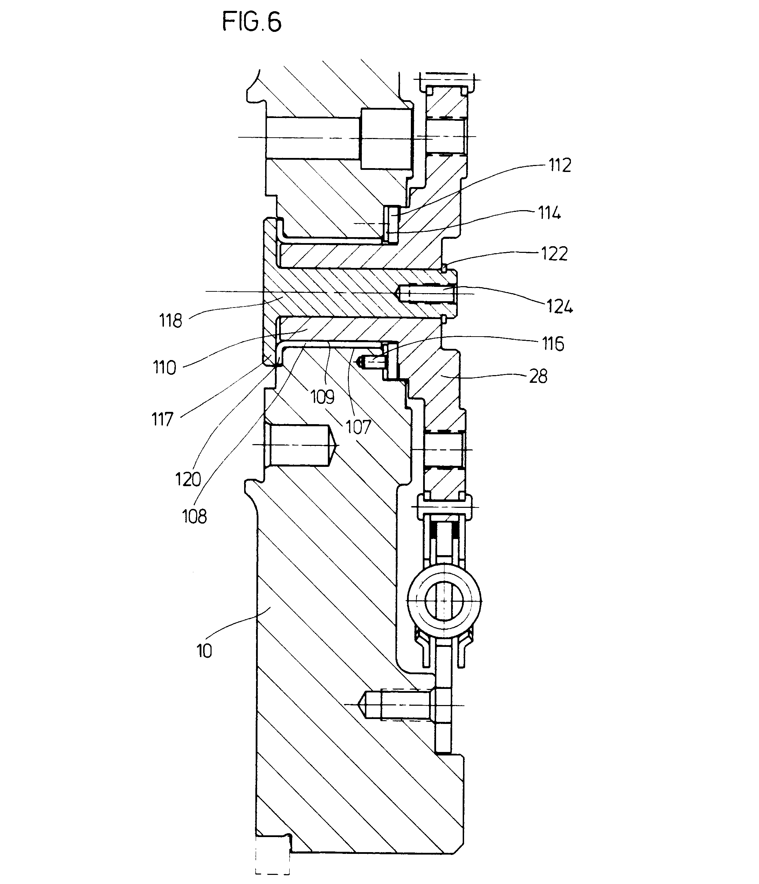

Gemäß den Ausführungsformen der Figuren 4 und 5 tritt der Bundbolzen vollständig durch eine axiale Bohrung in der Torsionsdämpfernabe 28 durch und wird an seinem überstehenden Ende durch eine Wellenmutter 88 mit Sicherungsblech (Fig. 4, oben und Fig. 5) bzw. durch einen Sicherungsring 90 (Fig. 4, unten) gesichert.

Die obere Hälfte der Fig. 4 zeigt einen Bundbolzen 92, dessen linker Bund in eine ringförmige Aussparung 64 der Lagerinnenringbohrung des linken Rillenkugellagers 60 eingreift. Der Bundbolzen 92 verjüngt sich im mittleren Bereich des rechten Rillenkugellagers 62 auf einen Durchmesser, der dem Innendurchmesser der Bohrung 93 in der Torsionsdämpfernabe 28 entspricht. Für ihre Zentrierung weist die Torsionsdämpfernabe 28 einen in das rechte Rillenkugellager 62 eingreifenden zylinderförmigen Ansatz 94 auf.

Bei der unteren Hälfte der Fig. 4 trägt die Torsionsdämpfernabe 28 einen langen zylindrischen Ansatz 96, der sich fast vollständig durch die Bohrung beider Rillenkugellager 80 erstreckt, so daß die Torsionsdämpfernabe 28 unmittelbar durch die Rillenkugellager 80 getragen wird. Ein Bundbolzen 98 stützt sich mit seinem Bund 99 an der linken Stirnseite des linken Rillenkugellagers 80 ab und erstreckt sich durch eine axiale Bohrung 100 in der Torsionsdämpfernabe 28. An dem über die Torsionsdämpfernabe 28 überstehenden Ende 101 ist in den Bundbolzen 98 eine Nut eingelassen, die einen Sicherungsring 90 aufnimmt.

Die Lagerung gemäß der in der oberen Hälfte in Fig. 5 dargestellten Ausgestaltung ist der in Fig. 4, oben dargestellten ähnlich. Bei Fig. 5 weist der Bundbolzen 102 jedoch einen mittleren Bund 104 auf, der in ringförmige Aussparungen 72 zweier gleicher Rillenkugellager 68 eingreift.

Die untere Hälfte in Fig. 5 zeigt eine Lagerung, bei der ebenfalls ein Bundbolzen 106 mit einem mittleren Bund 104 verwendet wird. Im Unterschied zur oberen Hälfte dieser Figur trägt die Torsionsdämpfernabe 28 jedoch keinen in die Bohrung des rechten Rillenkugellagers eingreifenden zylindrischen Ansatz 94.

Die axialen Längen der Bundbolzenabschnitte und der zylindrischen Ansätze werden den Figuren 1 bis 5 zufolge so gewählt, daß ein Festspannen eines oder beider Rillenkugellager zwischen Bundbolzen 46, 74, 84, 92, 98, 102, 106 und Torsionsdämpfernabe 28 möglich ist.

Gemäß Fig. 6 ist die Torsionsdämpfernabe 28 über ein Gleitlager an der Schwungscheibe 10 gelagert. Eine axiale Bohrung 107 in der Schwungscheibe 10 nimmt eine selbstschmierende Bundbuchse 108 mit einer inneren Gleitfläche 109 auf. Die Gleitfläche 109 liegt auf einem zylindrischen Ansatz 110 der Torsionsdämpfernabe 28 auf. Axialkräfte der Torsionsdämpfernabe 28 werden durch eine Anlaufscheibe 112 und eine Lagerscheibe 114 aufgenommen, wobei die Lagerscheibe 114 durch einen Paßstift 116 an einer Verdrehung gehindert wird. Ein Bundbolzen 118 hält die Torsionsdämpfernabe 28 und das Gleitlager in der Bohrung der Schwungscheibe 10 in axialer Richtung fest. Er stützt sich mit einem linken Bund 117 an dem Bund 120 der Bundbuchse 108 und damit auch an der Schwungscheibe 10 ab. Das rechte Ende des Bundbolzens 118 ragt über die Rückseite der Torsionsdämpfernabe 28 hinaus und ist hier durch einen Sicherungsring 122 gesichert. Eine Gewindebohrung 124 dient der Montage des Bundbolzens 118, der mittels einer in die Gewindebohrung 124 einschraubbaren Vorrichtung so weit aus der Torsionsdämpfernabe 28 gezogen werden kann, daß sich der Sicherungsring 122 einsetzen läßt.

Auch wenn die Erfindung lediglich an Hand einiger Ausführungsbeispiele beschrieben wurde, erschließen sich für den Fachmann im Lichte der vorstehenden Beschreibung viele verschiedenartige Alternativen, Modifikationen und Varianten, die unter die vorliegende Erfindung fallen.

**Patentansprüche**

1.  Torsionsschwingungsdämpferanordnung zur Übertragung von Drehmomenten von einem Antriebsteil, vorzugsweise der Schwungscheibe (10) einer Verbrennungskraftmaschine, auf ein angetriebenes Teil, vorzugsweise eine Gelenkwelle (57), wobei der Torsionsschwingungsdämpfer im wesentlichen wenigstens ein am Antriebsteil befestigbares Mitnehmerelement (24), wenigstens ein an einer Torsionsdämpfernabe (28), die mit dem angetriebenen Teil in Eingriff steht, befestigtes Mitnehmerelement (30, 32) sowie Dämpferfedern (34) enthält, die zwischen den Mitnehmerelementen (24, 30, 32) angeordnet sind, dadurch gekennzeichnet, daß die Torsionsdämpfernabe (28) durch wenigstens ein Lager (40, 60, 62, 68, 80, 108) an dem Antriebsteil (10) drehbar gelagert ist.

2.  Anordnung nach Anspruch 1, dadurch gekennzeichnet, daß die Torsionsdämpfernabe (28) drehfest mit dem angetriebenen Teil (57) verbunden ist.

3.  Anordnung nach Anspruch 1 oder 2, dadurch gekennzeichnet, daß die Torsionsdämpfernabe (28) eine im wesentlichen radial ausgerichtete Flanschfläche (52) aufweist, an die ein entsprechender Anschlußflansch (56) des angetriebenen Teils (57) befestigbar ist.

4.  Anordnung nach Anspruch 3, dadurch gekennzeichnet, daß die Dämpferfedern (34) radial außerhalb des Flanschbereiches (52) der Torsionsdämpfernabe (28) angeordnet sind.

5.  Anordnung nach einem der Ansprüche 1 bis 4, dadurch gekennzeichnet, daß das Lager ein zweireihiges Schrägkugellager (40) enthält.

6.  Anordnung nach einem der Ansprüche 1 bis 4, dadurch gekennzeichnet, daß das Lager ein gepaartes Rillenkugellager (60, 62, 68, 80) enthält.

7.  Anordnung nach einem der Ansprüche 1 bis 4, dadurch gekennzeichnet, daß das Lager ein Gleitlager (108) enthält.

8.  Anordnung nach einem der Ansprüche 1 bis 7, dadurch gekennzeichnet, daß der Lageraußenring von einer axialen Ausnehmung (36) des Antriebsteils (10) aufgenommen wird und ein Lagerinnenring die Torsionsdämpfernabe (28) trägt.

9.  Anordnung nach einem der Ansprüche 1 bis 8, dadurch gekennzeichnet, daß das Antriebsteil (10) eine axiale Bohrung (36) mit einer als Anschlag dienenden radialen Ringfläche (38) aufweist und daß der Lageraußenring einerseits durch diese Ringfläche (38) und andererseits durch einen an dem Antriebsteil (10) befestigbaren Sicherungsring (42) gegen axiale Verschiebung gesichert ist.

10. Anordnung nach einem der Ansprüche 1 bis 9, dadurch gekennzeichnet, daß die Torsionsdämpfernabe (28) derart ausgebildet ist, daß sie gegen das Lager (40, 60, 62, 68, 80), das Antriebsteil (10) und gegebenenfalls einen Sicherungsring (42) ein fremdkörperabweisendes Labyrinth (50) bildet.

11. Anordnung nach einem der Ansprüche 1 bis 10, dadurch gekennzeichnet, daß in die Innenbohrung des Lagers (40, 60, 62, 68, 80, 108) ein Bundbolzen (46, 74, 84, 92, 98, 102, 106, 118) von der der Torsionsdämpfernabe (28) axial gegenüberliegende Seite aus einsetzbar ist, der mit der Torsionsdämpfernabe (28) derart verschraubbar ist, daß der Lagerinnenring zwischen Torsionsdämpfernabe (28) und Bundbolzen (46, 74, 84, 92, 98, 102, 106, 118) eingespannt wird.

12. Anordnung nach Anspruch 11, dadurch gekennzeichnet, daß der Bundbolzen (46, 84, 92, 98, 118) an seinem einen Ende einen Bund (47, 86, 99, 117) trägt, der im Bereich des der Torsionsdämpfernabe (28) axial gegenüberliegenden Endes des Lagerinneringes an diesem anliegt.

13. Anordnung nach Anspruch 11, dadurch gekennzeichnet, daß der Bundbolzen (74, 102, 106) in seinem axial mittleren Bereich einen Bund (76, 104) trägt, der in wenigstens eine mittlere Ringnut (72) zweier hintereinander angeordneter Rillenkugellager (68) eingreift.

14. Anordnung nach einem der Ansprüche 1 bis 13, dadurch gekennzeichnet, daß die Torsionsdämpfernabe (28) einen Ansatz (44, 94, 96, 110) aufweist, der von der axialen Bohrung (109) des Lagerinnenringes aufgenommen und geführt wird und dessen axiale Erstreckung kürzer ist als die des Lagerinnenringes.

15. Anordnung nach einem der Ansprüche 11 bis 14, dadurch gekennzeichnet, daß die Torsionsdämpfernabe (28) auf der dem Lager zugewandten Seite eine axiale Ausnehmung (78) aufweist, in die ein Abschnitt des Bundbolzens (74, 84) paßgenau eingreift.

16. Anordnung nach Anspruch 15, dadurch gekennzeichnet, daß ein Abschnitt des Bundbolzens (92, 98, 102, 106) durch eine axiale Bohrung (93) in der Torsionsdämpfernabe (28) hindurchgreift und an seinem durchgreifenden freien Ende (101) eine Befestigungsanordnung

(88, 90) trägt.

FIG.1

FIG. 2

FIG. 3

FIG.4

FIG.5

FIG.6

**Europäisches Patentamt**

**EUROPÄISCHER RECHERCHENBERICHT**

Nummer der Anmeldung

**EP 91 11 6504**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X<br>A | FR-A-2 554 891  (LUK)<br>(* Ansprüche 1-6,19; Abbildungen *) | 1,7<br>2,3,5,6,<br>10,14 | F 16 F 15/12 |
| Y | US-A-2 215 671  (BORG-WARNER CORP.)<br>* Abbildung * * | 1,2 | |
| Y | US-A-3 107 551  (GENERAL MOTORS CORP.)<br>* Abbildung 1 * * | 1,2 | |
| A | PATENT ABSTRACTS OF JAPAN vol. 2, no. 107 (M-78)(3230) 6. September 1978<br>& JP-A-53 073 730 ( MITSUBISHI JIDOSHA KOGYO ) 30. Juni 1978<br>* Zusammenfassung * * | 1 | |
| A | US-A-4 483 684  (TWIN DISC INC.)<br>* Spalte 4, Zeile 22 - Spalte 5, Zeile 4; Abbildungen 1,4,5 * * | 1-4 | |
| A | EP-A-0 270 980  (VOLKSWAGEN AG) | | |
| A | GB-A-2 189 307  (FICHTEL & SACHS) | | RECHERCHIERTE SACHGEBIETE (Int. Cl.5) |
| A | DE-A-3 603 209  (BARSCH H.P., JOHNEN R.) | | F 16 F<br>F 16 D |

Der vorliegende Recherchenbericht wurde für alle Patentansprüche erstellt

| Recherchenort | Abschlußdatum der Recherche | Prüfer |
|---|---|---|
| Den Haag | 11 Februar 92 | TSITSILONIS L. |